# EUROPÄISCHE PATENTSCHRIFT

(11) **EP 3 464 059 B1**
(45) Veröffentlichungstag und Bekanntmachung des Hinweises auf die Patenterteilung: **12.05.2021**
(21) Anmeldenummer: 17732760.8
(22) Anmeldetag: 31.05.2017
(51) Int. Cl.: B64B 1/08, B64C 1/08, B64C 1/12, B64C 1/26, B64C 1/34, B64C 3/32, B64C 3/38, B64C 11/00, B64C 13/50, B64C 39/00, B64D 27/24, B64C 37/02, B64C 27/24, B64B 1/18, B64B 1/20, B64B 1/32, B64B 1/38, B64B 1/58, B64C 39/02

(54) **FLUGGERÄT**
AIRCRAFT
AÉRONEF

(30) Priorität: 31.05.2016 DE 102016110058
(43) Veröffentlichungstag der Anmeldung: 10.04.2019
(73) Patentinhaber: Hybrid-Airplane Technologies GmbH, 76530 Baden-Baden (DE)
(72) Erfinder: SINGER, Csaba, 76530 Baden-Baden (DE)
(74) Vertreter: Gauss, Nikolai
(86) Internationale Anmeldenummer: PCT/EP2017/063221
(87) Internationale Veröffentlichungsnummer: WO 2017/207666

(56) Entgegenhaltungen:
- WO-A1-96/05103
- WO-A1-2012/025769
- DE-A1- 3 508 101
- DE-A1-102006 028 885
- FR-A- 673 934
- GB-A- 191 308 754
- US-A- 4 113 206
- US-A1- 2009 263 633
- US-A1- 2009 314 880
- US-A1- 2012 248 241
- US-B1- 9 139 278

## Beschreibung

Die Erfindung betrifft ein Fluggerät mit einer Tragstruktur und einer von der Tragstruktur aufgespannten, mit einem Gas befüllbaren Hülle.

Ein derartiges Fluggerät ist aus der früheren Patentanmeldung DE 10 2006 028885 A1 des Erfinders dieser Anmeldung bekannt. Ein gattungsgemäßes Fluggerät ist weiterhin aus der US 2012/248241 A1 bekannt.

Der Erfindung liegt die Aufgabe zugrunde, aus einfachen Elementen eine tragende, aufblasbare Struktur herzustellen.

Das Problem bei aufblasbaren Strukturen ist, dass bisher für von der aufblasbaren Struktur abstehende "schwere" Komponenten eine innere statische Tragstruktur benötigt wird, die sich innerhalb der aufblasbaren Struktur befindet und dort Platz einnimmt und den inneren Raum aufteilt und somit als störend empfunden wird.

Die Erfindung löst das vorgenannte Problem dadurch, dass der Innenraum der Hülle für das Tragen von Flügel keinen den Innenraum durchsetzenden Flügelholm aufweist und dadurch der Innenraum vollständig für die Aufnahme einer Gaszelle nutzbar ist. Das Fluggerät weist ein vollständig für die Gaszelle nutzbares Volumen sowie Flügel auf, die horizontal von der aufblasbaren Hülle abstehen und die aufblasbare Hülle nicht verformen.

Die Tragstruktur umfasst ein Stecksystem aus Stab- oder Rohrabschnitten und Verbindungsteilen zur Aufnahme einer oder mehrerer Endpartien der Stab- oder Rohrabschnitte, das derart ausgebildet ist, dass alle Komponenten am Tragen des Moments, das durch die abstehenden Flügel auf die Tragstruktur wirkt, beteiligt sind (gebogene "Querholme", Ringstruktur, aufgeblasene Struktur). Neben der Elastizität von bevorzugt verwendeten CFK-Rohren ist die Verteilung des Moments auf alle Komponenten der Hauptgrund, warum die sehr dünnen "Querholme" (CFK-Stäbe oder Rohre) nicht brechen und die Flügel halten.

Zur Lösung der vorgenannten Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Das erfindungsgemäße Fluggerät mit einer Tragstruktur und einer von der Tragstruktur aufgespannten, mit einem Gas befüllbaren Hülle, wobei Hüllenteile über mindestens einen Reißverschluss miteinander verbindbar sind und die Tragstruktur eine Mehrzahl von Stab- oder Rohrabschnitten aufweist, die eine kreisförmige, ovale oder polygonale Hauptspannebene für die Hülle definieren, ist dadurch gekennzeichnet, dass die Hülle zwei Hüllenhälften aufweist, die an einem kurzen Verbindungsbereich fest miteinander verbunden sind und sich muschelartig auseinanderklappen lassen, wenn der mindestens eine Reißverschluss geöffnet ist.

Bevorzugt ist die Hülle aus einem luftundurchlässigen, reißfesten Kunststoffgewebematerial, beispielsweise Spinnakersegelmaterial, gefertigt.

Weiter bevorzugt sind zwei gleich- oder gegenläufig betätigbare Reißverschlüsse vorgesehen, zwischen denen im geschlossenen Zustand ein Tunnel zur Aufnahme der die Hauptspannebene der Hülle definierenden Stab- oder Rohrabschnitte der Tragstruktur gebildet ist.

Weiter bevorzugt ist eine Kommunikationsantenne in das Material der Hülle eingearbeitet oder auf dieses aufgedampft oder aufgewalzt.

Weiter bevorzugt ist an der Hülle und einer in der Hülle angeordneten Gaszelle für ein Leichter-als-Luft Gas ein Hitzedraht angeordnet, um diese bei Bedarf zur Druckbefreiung entlang einer zweckdienlichen Strecke aufschmelzen zu können.

Weiter bevorzugt weist die Hülle innenseitig Befestigungselemente, beispielsweise Klettverschlussteile, zur Befestigung einer innerhalb der Hülle angeordneten, komplementäre Befestigungselemente aufweisenden Gaszelle für ein Leichter-als-Luft Gas auf.

Weiter bevorzugt weist die Tragstruktur form- und/oder längenveränderbare Verbindungselemente zwischen einem oberen und einem unteren Bereich der Hülle auf, mit denen eine veränderbare aerodynamische Außenkontur der Hülle herstellbar ist.

Im Folgenden werden einige beispielhafte Ausführungen und Merkmale beschrieben, die nicht oder nur teils Gegenstand der Ansprüche sind.

Die Tragstruktur ist hauptsächlich zusammengesetzt aus Stab- oder Rohrabschnitten, die in Form eines Stecksystems derart miteinander verbunden sind, dass sie im Flugbetrieb stabil zusammenhalten, sich aber zerstörungsfrei voneinander trennen lassen, um das Fluggerät in einem auseinandergebauten Zustand leicht transportieren zu können. Das Stecksystem umfasst Hülsenelemente, in die von beiden Seiten ein Rohrabschnitt einsteckbar ist. Das Stecksystem umfasst weiterhin Sicherungshülsen, die die in die Hülsenelemente eingesteckten Endpartien der Stab- oder Rohrabschnitte teilweise übergreifen und mit einem weiteren Abschnitt auch die Hülsenpartien außenseitig übergreifen. Die Tragstruktur weist in der Hauptspannebene im Wesentlichen eine kreisartige Form auf. Dies bedeutet, dass kein exakt lineares Einstecken der Stab- oder Rohrabschnitte in die Hülsenelemente möglich ist, sondern dass die Stab- oder Rohrabschnitte einen gewissen, wenn auch geringen, Radius in den Hülsenpartien aufweisen. Kohlefasermaterial ist gegenüber Einkerbungen sehr empfindlich. Die Hülsenpartien der Hülsenelemente sind deshalb derart ausgestaltet, dass die Endpartien der Stab- oder Rohrabschnitte jeweils mit etwas Spiel eingesteckt werden können. Innerhalb der Hülsenpartien weisen die Endpartien der Stab- oder Rohrabschnitte eine (sehr geringe) Biegung auf.

Anders verhält es sich mit der zusätzlichen Sicherungshülse. Diese wird mit einem ersten Abschnitt auf den Stab- oder Rohrabschnitt aufgeklebt oder auf andere Weise mit diesem verbunden, so dass die Sicherungshülse gegenüber dem Stab- oder Rohrabschnitt nicht verschiebbar ist. Ein weiterer Abschnitt der Sicherungshülse übergreift die Hülsenpartie der Hülsenelemente. Dabei soll jedoch kein Spiel vorhanden sondern eine genaue Passung gegeben sein. Es ist auch denkbar, dass die Sicherungshülse ein geringes Untermaß aufweist und auf die Hülsenpartie aufgepresst wird. Es soll ein Reibschluss, gegebenenfalls zusätzlich auch ein Formschluss beispielsweise durch Rastelemente wie komplementäre Nuten und Rippen hergestellt werden. Im Ergebnis wird damit eine äußerst stabile und biegebelastbare, jedoch bei Bedarf lösbare, Verbindung hergestellt.

Die Hülsenpartien der Hülsenelemente können zylindrisch durchgehend ausgebildet sein oder einen Innensteg aufweisen, der die zwei von den jeweiligen Enden eingeschobenen Stab- oder Rohrabschnitte voneinander trennt.

Bei einem bevorzugten Ausführungsbeispiel der Erfindung sind fünf Stab- oder Rohrabschnitte auf diese Weise zusammengesteckt. Denkbar ist, dass auch eine sehr große Anzahl von entsprechend kürzeren Stäben zusammengesteckt wird. Je mehr Stäbe verwendet werden, desto geringer wird der Biegeradius des einzelnen Stabes. Man nähert sich dann asymptotisch einem linearen Stecksystem an. Ein Vorteil der bevorzugten Ausführungsform ist, dass eine gewisse Vorspannung gegeben ist, die dem Zusammenhalt der Stab- oder Rohrabschnitte in dem Stecksystem zuträglich ist.

Das bevorzugte Ausführungsbeispiel hat sich bei Stab- oder Rohrabschnittdurchmessern von 8 mm gut bewährt. Es ist auch eine Variante realisiert, die einen Stab- oder Rohrabschnittdurchmesser von lediglich 6 mm verwendet. Hier wird das Stecksystem aufgrund von Erfahrungswerten etwas anders ausgeführt:
Die Stab- oder Rohrabschnitte mit 6 mm Durchmesser sind teleskopisch passend in Rohrabschnitte mit 8 mm Durchmesser einschiebbar, Rohrabschnitte mit einem Außendurchmesser von 8 mm weisen also einen Innendurchmesser von 6 mm auf. Bei dieser zweiten Variante sind die Hülsenelemente daher Abschnitte aus 8 mm Rohrmaterial. Die zusätzliche Sicherungshülse kann hier wegfallen, da die Hülsenelemente hier kein Metallmaterial aufweisen, das eine Kerbverletzung des Kohlefasermaterials bewirken kann, sondern es herrscht Materialgleichheit. Es ist eine zusätzliche, 3D-gedruckte Manschette oder Hülse um den Abschnitt aus 8 mm Material gelegt. Diese wirkt verstärkend bzw. stabilisierend. Im Inneren der Hülse sind die zwei Stababschnitte mit 6 mm Durchmesser durch ein Stecksystem auf Stoß zusammengefügt. Es ist ein Verbindungsstab vorgesehen, der in den 6 mm Rohrabschnitt eingesteckt wird. Dieses Verbindungselement ist nicht selbst rohrförmig, sondern ist als Vieleck ausgebildet, beispielsweise im Querschnitt dreieckig, quadratisch, fünfeckig oder hexagonal. Auch dieses Stecksystem lässt sich zerstörungsfrei wieder auseinander bauen.

Die die Hauptspannebene definierenden Stab- oder Rohrabschnitte werden zweckmäßig unterseitig von zwei sich kreuzenden weiteren Stab- oder Rohrabschnitten oder mehrfach zusammengesetzten Abschnitten verstärkt. Bei einem bevorzugten Ausführungsbeispiel sind zwei derartige Stabilisierungselemente vorgesehen, die ein gebogenes 90°-Kreuz bilden.

Hierbei kommen unterschiedliche Hülsenelemente zum Einsatz. Die erste Variante ist im Wesentlichen als T-Stück ausgebildet und nimmt die Endpartien der Stab- oder Rohrabschnitte der Hauptspannebene auf und im rechten Winkel dazu die Endpartie des Stabilisierungselements. Die zweite Variante der Hülsenelemente weist zusätzlich dazu eine weitere Hülsenpartie auf, die eine Achse eines der Flügel aufnimmt. Flügelseitig ist an den Hülsenelementen jeweils ein Gehäuse mit einem Servomotor zum Antrieb eines Zahnrads angeordnet, das mit einem komplementären Zahnrad am Flügel zusammenarbeitet, um diesen verstellen zu können. Ein endseitig am Flügel angeordnetes Antriebsaggregat, beispielsweise ein Propeller, kann zusammen mit dem Flügel verstellt werden oder alternativ unabhängig von der Flügelstellung.

Im unteren Kreuzungsbereich der Stabilisierungselemente ist ein Tragrahmen aus Kohlefasermaterial angeordnet. Dieser Rahmen weist Durchgangsöffnungen in Seitenteilen auf, durch die die zwei Stabilisierungselemente einander kreuzend angeordnet sind. Demgemäß sind die Durchtrittsöffnungen auf etwas unterschiedlichen Höhen angeordnet, um die Stabilisierungselemente aneinander vorbei führen zu können. Weiterhin dient der Tragrahmen zur Aufnahme eines Lüfters, der den Innenbereich der Hülle mit Druckluft beaufschlagt. Es lässt sich ein Innendruck in der Größenordnung von 100 Pascal erzeugen. Dieser Innendruck wirkt kraftmäßig auch auf die gesamte Tragstruktur und bestimmt deren Form mit.

Weiterhin schließen an den Tragrahmen Stützfüße an, mit denen das gesamte Gerät am Boden aufsetzt. Diese sind in der üblichen Art federnd ausgebildet, um Stöße aufnehmen zu können. Im Übrigen sind sie möglichst filigran und leicht ausgebildet, um Gewicht zu sparen.

Der Flügel weist als Tragelement einen Kohlefaserstab auf. Die Massenverteilung des Flügels einschließlich des Antriebsmotors ist möglichst symmetrisch bezüglich dieses Stabes ausgebildet, um ein Gegenmoment möglichst zu verhindern oder gering zu halten. Der Servomotor zum Verstellen des Flügels wird dadurch weniger belastet. In einem bevorzugten Ausführungsbeispiel kann die Massenverteilung auch so sein, dass im Falle eines Ausfalls des Servomotors der Flügel sich selbsttätig in eine Vertikalstellung bewegt aufgrund einer größeren Masse im unteren Bereich.

Die Tragstruktur wird an der Hülle bevorzugt wie folgt befestigt: Die Hülle weist eine linsenförmige Gestalt auf. Am Umfang ist ein doppeltes Reißverschlusssystem vorgesehen. Es ist ein innerer und ein äußerer Reißverschluss vorgesehen, zwischen denen ein Tunnel ausgebildet ist. An einer Stelle ist ein Endpunkt der zwei Reißverschlüsse vorgesehen. Wenn beiden Reißverschlüsse geöffnet sind, lässt sich die Hülle muschelartig auseinanderklappen und ist dann nur noch am Endbereich der zwei Reißverschlüsse miteinander verbunden. Das Tragsystem mit den Stäben wird dann sukzessive in den Tunnel zwischen den Reißverschlüssen eingebracht, wobei diese dann entsprechend Stück für Stück verschlossen werden, bis sie vollkommen geschlossen sind. An mehreren Stellen sind entsprechend den Verbindungen durch die Hülsenelemente zu den Flügeln bzw. den unteren Tragstrukturen die muffenartigen Verbindungsstücke eingebracht. Hierzu ist eine Öffnung am Reißverschluss vorbei durch die Hülle hindurch (nach innen) vorgesehen. Dort wo die Hülsenelemente angeordnet sind, ist der Reißverschluss über eine gewisse, kurze Strecke nicht mit der Hülle vernäht, so dass eine Lücke bleibt, durch die dann der Anschluss der Stabilisierungselemente an die Hülsenelemente erfolgen kann.

Der vorgenannte Tragrahmen ist im Inneren der Hülle angeordnet und weist nach außen durchführende Verbindungsstäbe auf, an die ein Nutzlasttragkörper angebunden ist. Die Nutzlast kann unterschiedlichster Natur sein, beispielsweise ein Funksender und/oder -empfänger oder eine Kamera oder dergleichen.

Eine Heliumgaszelle ist mittels einer Reihe von Klettverschlusselementen im Innenbereich oben in der Hülle fixiert, damit sie sich beim Befüllen gleichmäßig ausbildet und nicht verschiebt.

Die grundlegenden Flugeigenschaften des Fluggeräts sind in der eingangs genannten DE 10 2006 028885 A1 beschrieben. Das Fluggerät weist eine vorzugsweise kreisrunde, linsenförmige Hülle auf, wobei an der Hülle seitlich zwei Flügel mit beispielsweise symmetrischem Flügelprofil angebracht sind, von denen mindestens einer so aufgebaut sein kann, dass sowohl das vordere, als auch das hintere Teil des Flügels um einen bestimmten Winkel geklappt werden kann und somit die Flügel des Hybridflugzeugs sowohl eine rotationssymmetrische, als auch eine spiegelsymmetrische Konfiguration einnehmen können. Die Anstellwinkel der Flügel mit beispielsweise symmetrischem Flügelprofil können vorzugsweise mit Hilfe des Drehmechanismus geregelt an den aktuellen Flugzustand angepasst werden. Antriebsaggregate, beispielsweise Propeller, sind an den Enden der Flügel angeordnet. Die Antriebsaggregate können in eine gegensinnige Konfiguration gebracht werden, in der ihre Schubvektoren eine Rotation des Fluggeräts bewirken und diesem hubschrauberartige Flugeigenschaften verleihen. Die Antriebsaggregate können auch in eine gleichsinnige Konfiguration gebracht werden, in der ihre Schubvektoren in die gleiche Richtung weisen und das Fluggerät wie ein herkömmliches Tragflächenflugzeug gerichtet fliegt. Durch die Gaszelle mit Leichter-als-Luft-Füllung weist das Fluggerät zudem Eigenschaften eines Ballons auf.

Im Folgenden wird die Erfindung anhand eines in der Zeichnung in schematischer Weise dargestellten Ausführungsbeispiels näher erläutert. Es zeigen
- Fig. 1: eine Ansicht eines Fluggeräts mit einer Hülle, Flügeln und Antrieben;
- Fig. 2: eine in der Hülle des Fluggeräts gemäß Fig. 1 angeordnete Tragstruktur;
- Fig. 3: eine Detailansicht eines Hülsenelements der Tragstruktur gemäß Fig. 2;
- Fig. 4: eine Detailansicht eines weiteren Hülsenelements der Tragstruktur gemäß Fig. 2;
- Fig. 5: eine Sicherungshülse für die Tragstruktur gemäß Fig. 2;
- Fig. 6: ein Rahmenteil der Tragstruktur gemäß Fig. 2; und
- Fig. 7: ein Nutzlastträger zur Befestigung an dem Rahmenteil gemäß Fig. 6.

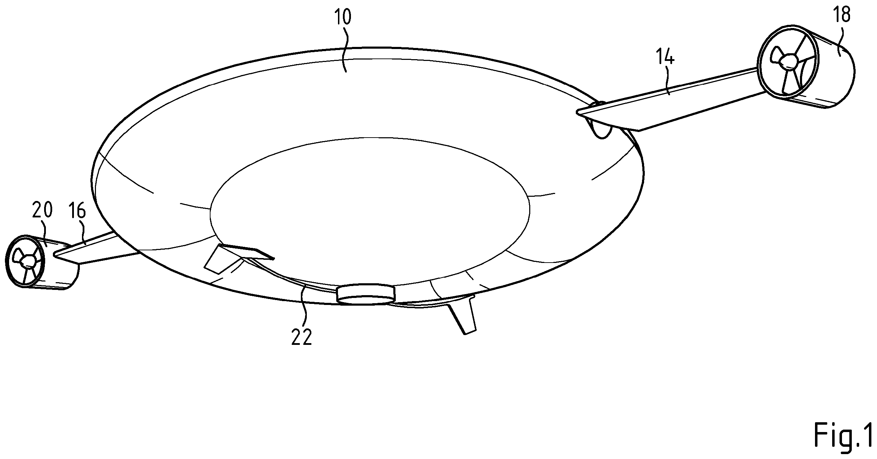

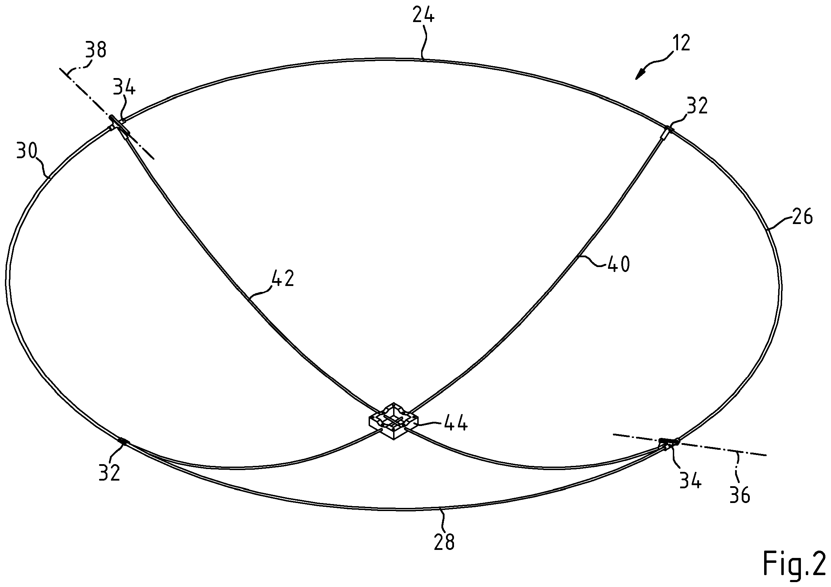

Das in Fig. 1 dargestellte Fluggerät weist eine Hülle 10 auf, in der eine Tragstruktur 12 gemäß Fig. 2 angeordnet ist. An der Tragstruktur 12 sind einander gegenüberliegend zwei Flügel 14, 16 angeordnet, die an ihren Enden Propellerantriebe 18, 20 tragen, die zusammen mit oder unabhängig von den Flügeln 14, 16 um die Flügellängsachse verschwenkbar sind. An einer unterhalb der Hülle 10 angeordneten Schiene 22 kann eine entlang der Schiene 22 verschiebbare Nutzlast angeordnet werden.

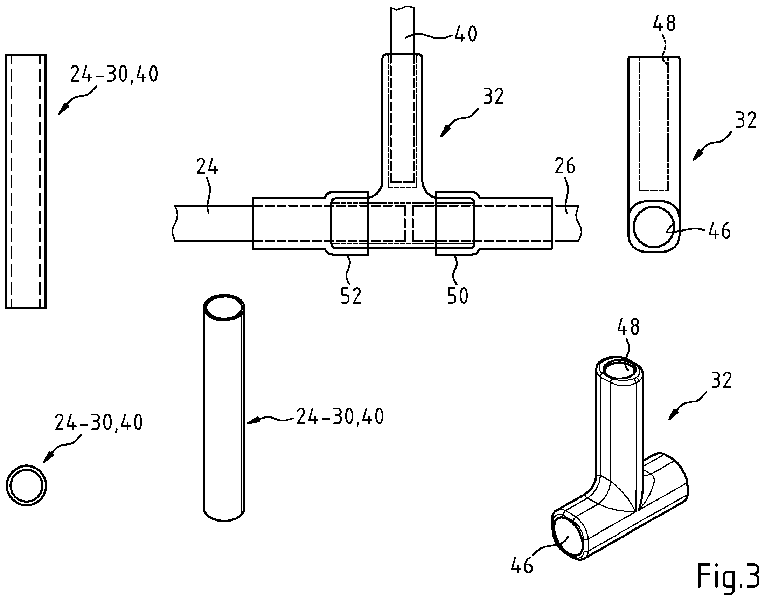

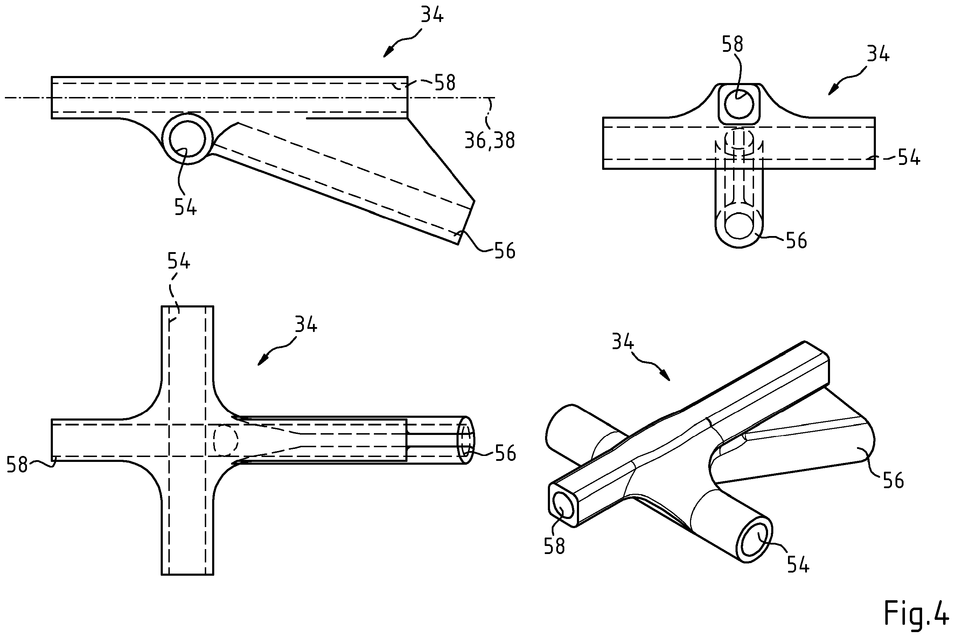

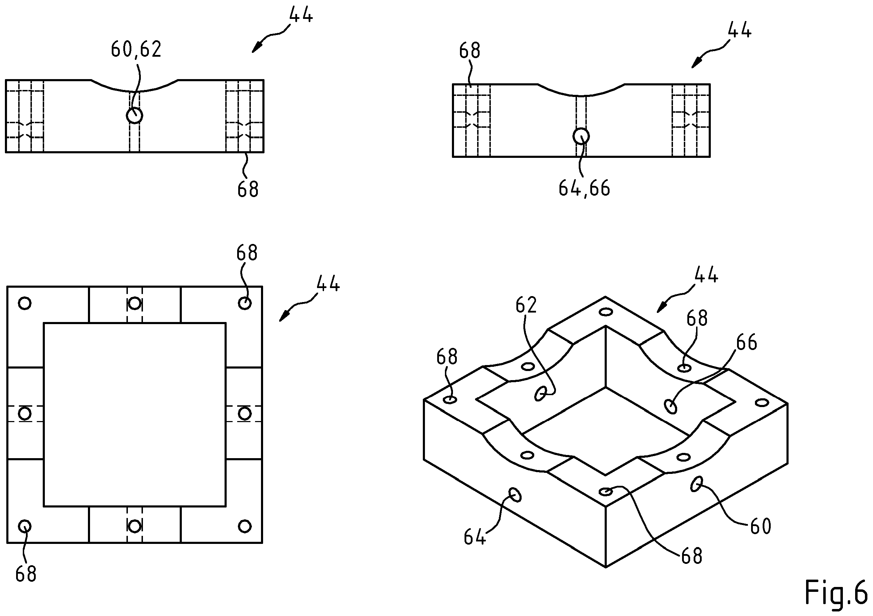

Die in Fig. 2 dargestellte Tragstruktur 12 weist eine Mehrzahl von Stab- oder Rohrabschnitten 24-30 auf, die eine Hauptspannebene für die Hülle 10 definieren. Die Stab- oder Rohrabschnitte 24-30 sind mit ihren zwei Endbereichen jeweils in Hülsenelemente 32 bzw. 34 eingesteckt, die in den Fig. 3 und 4 im Detail dargestellt sind. Die Drehachse der Flügel 14, 16 und/oder der Propellerantriebe 18, 20 sind durch die gestrichelten Linien 36, 38 angedeutet, die durch Hülsenpartien der Hülsenelemente 34 führen. Der durch die Stab- oder Rohrabschnitte 24-30 gebildete Ring ist Biege- und Torsionskräften ausgesetzt und daher durch weitere Stab- oder Rohrabschnitte 40, 42 stabilisiert, die mit Endpartien in weitere Hülsenpartien der Hülsenelemente 32, 34 eingreifen. Im Kreuzungsbereich der Stab- oder Rohrabschnitte ist ein Rahmenteil 44 (Fig. 6) angeordnet, das in seinen Seitenteilen Durchtrittsöffnungen für die Stab- oder Rohrabschnitte 40, 42 aufweist, so dass diese in ihrer Lage festgelegt sind. An dem Rahmenteil 44 ist weiterhin ein nicht näher dargestelltes Gebläse angeordnet, mit dem der Innenraum der Hülle 10 aufgeblasen wird.

Das in Fig. 3 in verschiedenen Ansichten dargestellte Hülsenelement 32 ist als T-Stück ausgebildet und weist eine erste Hülsenpartie 46 auf, in die Endbereiche der Stab- oder Rohrabschnitte 24, 26 bzw. 28, 30 eingesteckt sind, und eine zweite Hülsenpartie 48, in die eine Endpartie des stabilisierenden Stab- oder Rohrabschnitts 40 eingesteckt ist. Um die Endpartien der Stab- oder Rohrabschnitte 24, 26 bzw. 28, 30 und/oder 40 gegen ein Herausrutschen aus der Hülsenpartie 46 oder 48 zu sichern, sind Sicherungshülsen 50, 52 vorgesehen, die kraftschlüssig auf den Stab- oder Rohrabschnitten 24, 26 bzw. 28, 30 und/oder 40 sowie der Außenseite der Hülsenpartie 46, 48 angeordnet sind, während die Stab- oder Rohrabschnitte 24, 26 bzw. 28, 30 und/oder 40 selbst mit etwas Spiel in den jeweiligen Hülsenpartien 46, 48 angeordnet sind, um bei wechselnden Belastungen die Bruchgefahr zu mindern.

Das in Fig. 4 in verschiedenen Ansichten dargestellte Hülsenelement 34 weist wie das Hülsenelement 32 Hülsenpartien 54 und 56 zur Aufnahme der Endpartien der Stab- oder Rohrabschnitte 24-30 bzw. 42 auf, die ebenfalls (hier nicht näher dargestellt) mit Sicherungshülsen versehen sind. Zusätzlich weist das Hülsenelement 34 eine Hülsenpartie 58 auf, durch die Tragachsen der Flügel 14, 16 verlaufen.

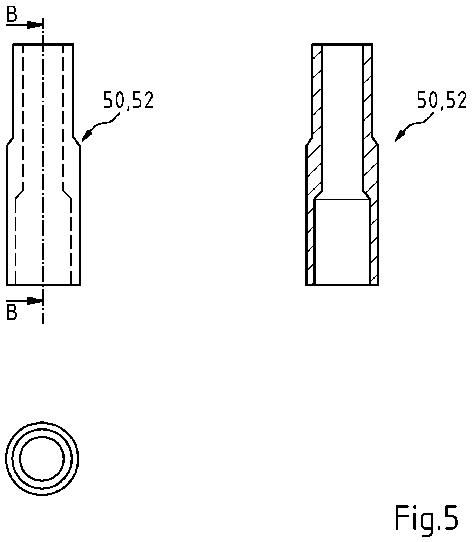

Fig. 5 zeigt eine Ansicht und einen Schnitt durch die Sicherungshülse 50, 52. Fig. 6 zeigt verschiedene Ansichten des Rahmenteils 44. In den Wänden des Rahmenteils 44 sind Durchtrittsöffnungen 60, 62 für den Stab- oder Rohrabschnitt 42 und Durchtrittsöffnungen 64, 66 für den Stab- oder Rohrabschnitt 40 vorgesehen. Eine Mehrzahl von die Wände des Rahmenteils 44 durchsetzenden Bohrungen 68 dient der Befestigung des nicht näher dargestellten Gebläses sowie möglicher weiterer Komponenten, wie beispielsweise elektronische Steuergeräte oder dergleichen.

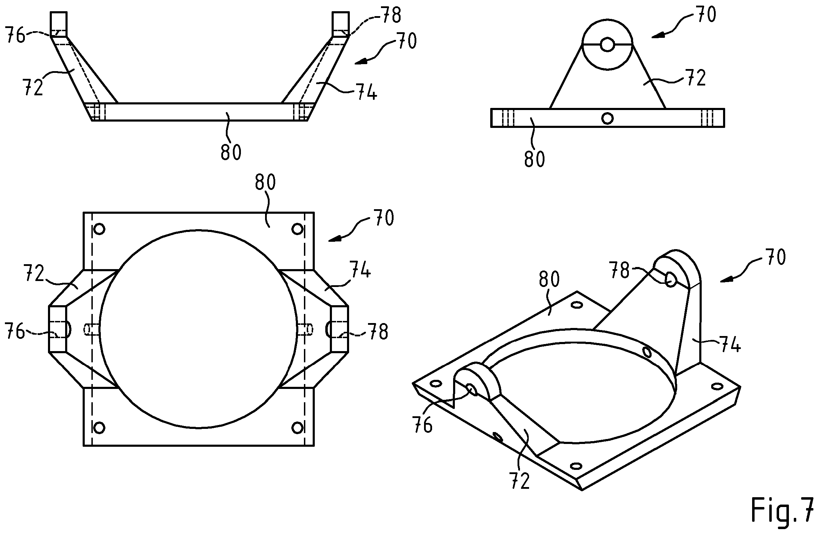

Weiterhin ist an dem Rahmenteil 44 ein in Fig. 7 in verschiedenen Ansichten dargestellter Nutzlasttragkörper 70 angeordnet. Der Nutzlasttragkörper 70 weist dazu zwei Laschen 72, 74 mit Bohrungen 76, 78 auf, durch die beispielsweise einer der Stab- oder Rohrabschnitte 40, 42 hindurchtritt. An einer Bodenplatte 80 des Nutzlasttragkörpers 70 können Nutzlasten unterschiedlichster Art befestigt werden, beispielsweise Kameras, Funksender und/oder -empfänger und dergleichen.

## Patentansprüche

1. Fluggerät mit einer Tragstruktur (12) und einer von der Tragstruktur (12) aufgespannten, mit einem Gas befüllbaren Hülle (10), wobei Hüllenteile über mindestens einen Reißverschluss miteinander verbindbar sind und die Tragstruktur (12) eine Mehrzahl von Stab- oder Rohrabschnitten (24 - 30) aufweist, die eine kreisförmige, ovale oder polygonale Hauptspannebene für die Hülle (10) definieren, **dadurch gekennzeichnet, dass** die Hülle (10) zwei Hüllenhälften aufweist, die an einem kurzen Verbindungsbereich fest miteinander verbunden sind und sich muschelartig auseinanderklappen lassen, wenn der mindestens eine Reißverschluss geöffnet ist.

2. Fluggerät nach Anspruch 1, **dadurch gekennzeichnet, dass** die Hülle (10) aus einem luftundurchlässigen, reißfesten Kunststoffgewebematerial, beispielsweise Spinnakersegelmaterial, gefertigt ist.

3. Fluggerät nach Anspruch 1 oder 2, **dadurch gekennzeichnet, dass** zwei gleich- oder gegenläufig betätigbare Reißverschlüsse vorgesehen sind, zwischen denen im geschlossenen Zustand ein Tunnel zur Aufnahme der die Hauptspannebene der Hülle (10) definierenden Stab- oder Rohrabschnitte (24 - 30) der Tragstruktur (12) gebildet ist.

4. Fluggerät nach einem der Ansprüche 1 bis 3, **dadurch gekennzeichnet, dass** eine Kommunikationsantenne in das Material der Hülle (10) eingearbeitet oder auf dieses aufgedampft oder aufgewalzt ist.

5. Fluggerät nach einem der Ansprüche 1 bis 4, **dadurch gekennzeichnet, dass** an der Hülle (10) und einer in der Hülle (10) angeordneten Gaszelle für ein Leichter-als-Luft Gas ein Hitzedraht angeordnet ist, um diese bei Bedarf zur Druckbefreiung entlang einer zweckdienlichen Strecke aufschmelzen zu können.

6. Fluggerät nach einem der Ansprüche 1 bis 5, **dadurch gekennzeichnet, dass** die Hülle (10) innenseitig Befestigungselemente, beispielsweise Klettverschlussteile, zur Befestigung einer innerhalb der Hülle (10) angeordneten, komplementäre Befestigungselemente aufweisenden Gaszelle für ein Leichter-als-Luft Gas aufweist.

7. Fluggerät nach einem der Ansprüche 1 bis 6, **dadurch gekennzeichnet, dass** die Tragstruktur (12) form- und/oder längenveränderbare Verbindungselemente zwischen einem oberen und einem unteren Bereich der Hülle (10) aufweist, mit denen eine veränderbare aerodynamische Au-ßenkontur der Hülle (10) herstellbar ist.

## Claims

1. Aircraft with a supporting structure (12) and an envelope (10) which is spanned by the supporting structure (12) and can be filled with a gas, wherein envelope parts can be connected to one another via at least one zip fastener and the supporting structure (12) has a plurality of rod or tube sections (24 - 30) which define a circular, elliptical or polygonal main span plane for the envelope (10), **characterised in that** the shell (10) comprises two shell halves which are fixedly connected to each other at a short connecting region and can be unfolded in a shell-like manner when the at least one zip is open.

2. Aircraft according to claim 1, **characterized in that** the envelope (10) is made of an air-impermeable material, for example spinnaker sail material.

3. Aircraft according to claim 1 or 2, **characterised in that** two zip fasteners are provided which can be actuated in the same or opposite directions and between which, in the closed state, a tunnel is formed for receiving the rod or tube sections (24 - 30) of the supporting structure (12) defining the main span plane of the envelope (10).

4. An aircraft according to any one of claims 1 to 3, **characterised in that** a communications antenna is incorporated into or vapor-deposited or rolled onto the material of the envelope (10).

5. An aircraft according to any one of claims 1 to 4, **characterised in that** a heat wire is arranged on the envelope (10) and on a lighter-than-air gas cell arranged in the envelope (10) to enable them to be melted along an expedient path for depressurisation, if required.

6. Aircraft according to one of claims 1 to 5, **characterized in that** the envelope (10) has on the inside fastening elements, for example hook-and-loop elements, for fastening to complementary fastening elements on a gas cell for a lighter-than-air gas arranged inside the envelope (10).

7. Aircraft according to any one of claims 1 to 6, **characterised in that** the support structure (12) has shape- and/or length-variable connecting elements between an upper and a lower region of the envelope (10), with which a variable aerodynamic outer contour of the envelope (10) can be produced.

## Revendications

1. Aéronef avec une structure porteuse (12) et une coque (10) portée par la structure porteuse (12) et pouvant être remplie d'un gaz, les parties de la coque pouvant être reliées entre elles par au moins une fermeture éclaire et la structure porteuse (12) présentant une pluralité de sections de tige ou de tube (24 - 30) qui définissent un plan de portée principal circulaire, ovale ou polygonal pour la coque (10), plan de tension principal ovale ou polygonal pour l'enveloppe (10), **caractérisé en ce que** l'enveloppe (10) présente deux moitiés d'enveloppe qui sont fermement reliées l'une à l'autre au niveau d'une courte zone de liaison et qui peuvent être repliées à la manière d'une coquille lorsque la au moins une fermeture éclaire est ouverte.

2. Aéronef selon la revendication 1, **caractérisé en ce que** l'enveloppe (10) consiste en un matériau en tissu plastique imperméable à l'air et résistant à la déchirure, par exemple le matériau des voiles de spinnaker.

3. Avion selon la revendication 1 ou 2, **caractérisé en ce que** deux fermetures éclairs sont prévues qui peuvent être actionnées dans la même direction ou dans des directions opposées et entre lesquelles, à l'état fermé, un tunnel est formé pour recevoir les sections de tige ou de tube (24 - 30) de la structure de support (12) définissant le plan de portée principale de l'enveloppe (10).

4. Aéronef de l'une de ces revendications 1 à 3, **caractérisé en ce qu'**une antenne de communication est incorporée dans le matériau de l'enveloppe (10) ou déposée en phase vapeur ou laminée sur celui-ci.

5. Aéronef selon l'une des revendications 1 à 4, **caractérisé en ce qu'**un fil chauffant est disposé sur l'enveloppe (10) et une cellule de gaz plus léger que l'air disposée dans l'enveloppe (10) pour permettre sa fusion le long d'un chemin utile à la dépressurisation si nécessaire.

6. Aéronef selon l'une des revendications 1 à 5, **caractérisé en ce que** l'enveloppe (10) comporte à l'intérieur des éléments de fixation, par exemple des pièces de fermeture auto-agrippante, pour fixer une cellule à gaz pour un gaz plus léger que l'air disposée à l'intérieur de l'enveloppe (10) et comportant des éléments de fixation complémentaires.

7. Aéronef selon l'une des revendications 1 à 6, **caractérisé en ce que** la structure de support (12) comprend des éléments de liaison de forme et/ou de longueur variables entre une région supérieure et une région inférieure de l'enveloppe (10), avec lesquels un contour extérieur aérodynamique variable de l'enveloppe (10) peut être produit.
